## Europäisches Patentamt
## European Patent Office
## Office européen des brevets

(11) Veröffentlichungsnummer: **0 034 346**
**B1**

(12) **EUROPÄISCHE PATENTSCHRIFT**

(45) Veröffentlichungstag der Patentschrift:
25.01.84

(51) Int. Cl.³: **F 16 B 13/14**

(21) Anmeldenummer: 81101015.6

(22) Anmeldetag: 13.02.81

(54) **Befestigungssatz zum Befestigen von Verkleidungen, Leisten oder dergleichen Bauteilen an einer Wand mittels eines Klemmkopfdübels aus Kunststoff.**

(30) Priorität: 14.02.80 DE 3005544

(43) Veröffentlichungstag der Anmeldung:
26.08.81 Patentblatt 81/34

(45) Bekanntmachung des Hinweises auf die Patenterteilung:
25.01.84 Patentblatt 84/4

(84) Benannte Vertragsstaaten:
AT CH DE FR IT LI NL

(56) Entgegenhaltungen:
DE - A - 2 701 568    DIN 6900
DE - A - 2 718 147    DIN 6901
DE - B - 1 625 394    DIN 6906
DE - B - 2 454 677
DE - U - 7 006 595
DE - U - 7 404 063
FR - A - 697 676
FR - A - 1 240 813
FR - A - 1 541 627
FR - A - 2 109 244
FR - A - 2 425 014
US - A - 2 058 197

**Die Akte enthält technische Angaben, die nach dem Eingang der Anmeldung eingereicht wurden und die nicht in dieser Patentschrift enthalten sind.**

(73) Patentinhaber: **Bierbach, J. Georg, Werdohlerstrasse 23, D-5990 Altena/Westf. (DE)**

(72) Erfinder: **Knoche, Alfons, Overbergstrasse 7, D-5758 Fröndenberg (DE)**
Erfinder: **Renninger, Karl, Heedfelderstrasse 110, D-5880 Lüdenscheid (DE)**

(74) Vertreter: **Graf, Walter, Sckellstrasse 1, D-8000 München 80 (DE)**

ACTORUM AG

## Befestigungssatz zum Befestigen von Verkleidungen, Leisten od. dgl. Bauteilen an einer Wand mittels eines Klemmkopfdübels aus Kunststoff

Die Erfindung betrifft einen Befestigungssatz laut Oberbegriff des Hauptanspruches.

Zum Befestigen von Verkleidungen, Dämmplatten, Holzleisten oder dgl. Bauteilen an Wänden und Mauerwerken werden meist sog Klemmkopfdübel verwendet, die durch ein sowohl in dem Bauteil als auch in der dahinterliegenden Wand gebohrtes Loch von aussen eingesteckt werden, bis ihr unterer mit einer Spreizzone versehener Abschnitt im Loch der Mauer zu liegen kommt und der Dübelkopf am Rand des Loches im Bauteil anliegt. Wird anschliessend ein Befestigungselement, beispielsweise eine Schraube, in den Dübel eingetrieben, so wird die untere Spreizzone aufgespreizt und so der Dübel in der Wand verklemmt während der Schraubenkopf über den Dübelkopf auf die Oberseite des zu befestigenden Bauteils drückt und dieses somit über den Dübel an der Wand festhält und gegen diese fest drückt. Die Qualität solcher Befestigungen hängt weitgehend von der fachmännischen und sorgfältigen Montage solcher Befestigungssätze ab. Das Bauteil wird bei den bekannten Befestigungssätzen nur durch den Anspressdruck des Dübelkragens gehanten, der seinerseits durch den Schraubenkopf aufgebracht wird. Zwischen dem oberen meist zylindrisch und glatt ausgeführten Dübelabschnitt und der Innenseite des Loches in dem Bauteil besteht bei den bekannten Befestigungssätzen im montierten Zustant keine Haltekraft, im Gegenteil, das Loch im Bauteil ist meist im Durchmesser etwas grösser gewählt als der obere Schaft des Dübels. Dadurch besteht die Gefahr, dass sich das Bauteil gegenüber der Wand verschiebt oder die Verbindung im Laufe der Zeit locker wird. Bei unsachgemäss zu gross gewähltem Innendurchmesser des Bohrloches in dem Bauteil oder durch Materialfehler dieses Bauteiles im Bereich dieses Loches kann es sogar passieren, dass das Bauteil am Dübelkopf vorbei nach aussen durchgezogen wird, der Dübel also zwar in der Mauer noch festsitzt, das Bauteil aber locker ist.

Bei einem Befestigungssatz zum Befestigen einer Verkleidung oder eines Bauteiles in einem Abstand zu einer Wand ist es bekannt, an dem Dübel, dessen untere Spreizzone bei eingetriebenem Befestigungselement in der Bohrung der Wand aufgespreizt wird, im Bereich seines oberen Abschnitts, der im eingetriebenen Zustand in dem mit Abstand vor der Wand zu befestigenden Bauteil liegt, fächerartige Aussparungen vorzusehen und in diese gesonderte Metallzungen einzusetzen, die in ihrer Aussenfläche mit zahnartigen Sperrmitteln versehen sind und beim Eintreiben des Befestigungselementes radial nach aussen gedrückt werden (DE-AS Nr. 2454677). Der Innendurchmesser der oberen Spreizzone ist dabei so gewählt, dass beim Eintreiben des Befestigungselementes zuerst die obere Spreizzone aufgespreizt wird und so der Dübel zuerst in dem zu befestigenden Bauteil eingeklemmt wird, bevor überhaupt die untere in der Wand liegende Spreizzone aufgespreizt werden kann. Dies mag für die Abstandsbefestigung vorteilhaft sein, für die Anpressbefestigung von Bauteilen an einer Wand ist dies jedoch nicht vorteilhaft, denn wenn der Dübel zuerst oben im Bauteil festgelegt wird, besteht die Gefahr, dass das Befestigungselement beim weiteren Einschlagen nicht mehr mittig in den unteren Teil des Dübels eingetrieben wird sondern der Dübel im Mauerwerk unkontrolliert aufgespreizt wird oder das Befestigungselement sogar seitlich aus dem Dübel ausläuft. Auch ein zunächst provisorisches und nur loses Festlegen eines Bauteils an einer Wand, wie dies oftmals wünschenswert ist, ist mit dem bekannten Befestigungssatz nicht möglich.

Entsprechendes gilt für einen anderen bekannten nur im Mauerwerk eingesetzten Dübel mit zwei Spreizzonen, bei dem wiederum beim Eintreiben einer Schraube zunächst die obere Spreizzone und dann erst die untere Spreizzone aufgespreizt wird (FR-PS Nr. 1541627).

Es ist Aufgabe der Erfindung, einen Befestigungssatz zum Befestigen von Wandverkleidungen, Leisten oder dgl. Bauteilen an einer Wand zu schaffen, der die eingangs erwähnten Nachteile vermeidet und mit dem eine sichere Befestigung und ein sicherer Sitz des Bauteils an der Wand erreicht wird.

Diese Aufgabe wird ausgehend von einem Befestigungssatz laut Oberbegriff des Hauptanspruches durch dessen kennzeichnende Merkmale gelöst. Vorteilhafte Weiterbildungen ergeben sich aus den Unteransprüchen. Im Zusammenhang mit einem Befestigungssatz für die Durchsteckmontage und einem nur im Mauerwerk eingesetzten Spreizdübel ist es an sich bekannt, unterhalb des Schraubkopfes einen zylindrischen Schaftabschnitt vorzusehen, der im Durchmesser grösser als der das Gewinde tragende Schaftabschnitt ist und dessen Aussendurchmesser dem des Spreizdübels entspricht, der eine seitliche Fixierung des zu befestigenden Bauteils gewährleistet (DE-OS Nr. 2701568). Durch die Anwendung dieser an sich bekannten Ausbildung eines Befestigungselementes im Zusammenhang mit einem Klemmkopfdübel mit zwei Spreizzonen der eingangs erwähnten bekannten Art (DE-AS Nr. 2454677) und zwar mit einer Wahl der Innendurchmesser der beiden Spreizzonen im Sinne der Erfindung wird erstmals ein Befestigungssatz erreicht, bei dem beim Eintreiben des Befestigungselementes immer zuerst die untere Spreizzone in der Wand aufgespreizt wird und erst anschliessend dann die obere Spreizzone innerhalb des zu befestigenden Bauteiles. Dabei werden in dem zu befestigenden Bauteil zusätzliche radiale Spreizkräfte wirksam, die zusätzliche, die Halterung des Bauteiles verbessernde Lochleibungskräfte im Bauteil gewährleisten. Auch von ungeübten Personen können mit einem solchen Befestigungssatz einwandfreie Bauteilbefestigungen an einer Wand hergestellt werden, es kommt auch nicht mehr so genau auf die Grösse des Bohrloches in dem Bauteil an.

Die Dübelspreizzonen können von beliebiger bekannter Art sein. Es ist ferner zweckmässig, mindestens einigen der Längsund/oder Querschlitze der Dübelspreizzonen in an sich bekannter Weise (FR-PS Nr. 2109244) Sollbruchstellen zuzuordnen, so dass der Dübel auch mit seiner oberen Spreizzone richtig eingesetzt werden kann. Ferner ist es vorteilhaft, ebenfalls in an sich bekannter Weise (FR-PS Nr. 1240813) mindestens im Bereich der beiden Spreizzonen auf der Dübelinnenfläche mehrere in Längsrichtung parallele Stege auszubilden, um hierdurch die Führung des Befestigungselementes und die erzielbaren Lochleibungskräfte noch zu verbessern. Schliesslich hat es sich noch als vorteilhaft erwiesen, zwischen Kopf des Befestigungselements und dem Bauteil eine relativ grossflächige Unterlegscheibe vorzusehen, die grösser ist als der Aussendurchmesser des Dübelkopfes. Eine solche vorzugsweise auf der Unterseite mit Krallen versehene Unterlegscheibe drückt wesentlich grossflächiger auf die Oberfläche des zu befestigenden Bauteiles in unmittelbarer Umgebung des Montageloches als allein der Schrauben- bzw. Nagelkopf und dadurch wird die zusätzliche Klemmkraft der oberen Spreizzone in diesem Loch des Bauteils verbessert. Das Material des zu befestigenden Bauteils, meist Holz, kann so beim Aufspreizen der oberen Spreizzone am Lochrand nicht nach oben ausgedrückt werden, es wird vielmehr durch die Beilagscheibe nach unten gedrückt und dadurch werden die Lochleibungskräfte im Bauteil noch vergrössert.

Die Erfindung wird im folgenden anhand einer schematischen Zeichnung an Ausführungsbeispielen näher erläutert.

Fig. 1 zeigt einen Längsschnitt und zugehörige Querschnitte durch einen Klemmkopfdübel eines erfindungsgemässen Befestigungssatzes.

Fig. 2 zeigt das zugehörige Befestigungselement.

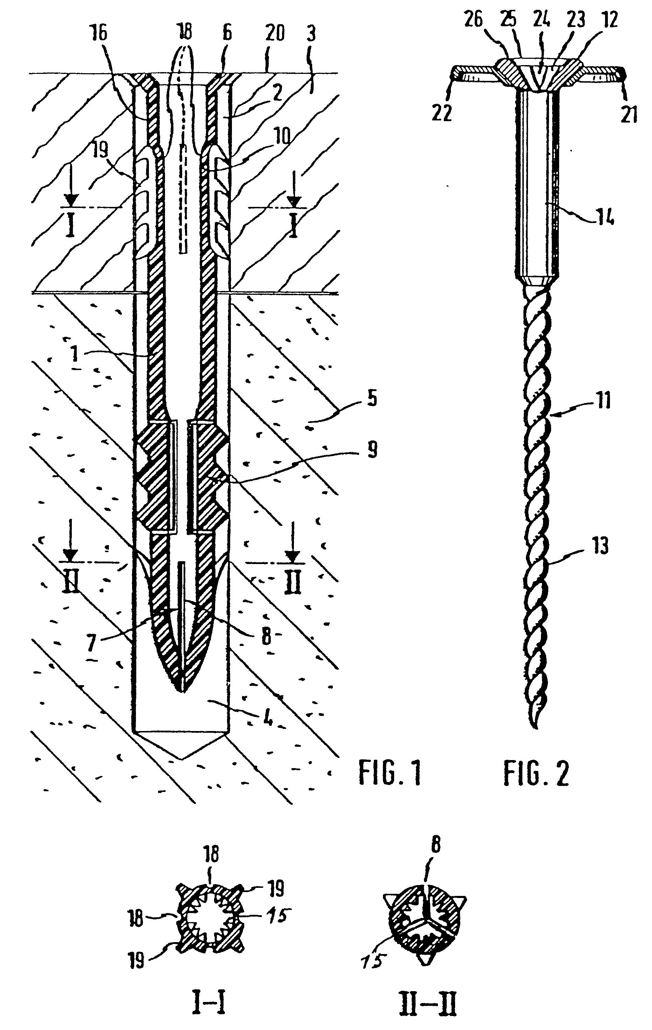

Fig. 1 zeigt einen Klemmkopfdübel 1 aus Kunststoff, der durch die Bohrung 2 eines Bauteiles 3 hindurch in die Bohrung 4 einer Wand 5 eingesetzt ist. Das Bauteil 3 ist beispielsweise eine Platte, eine Wandverkleidung oder eine Holzleiste, bei der Wand handelt es sich beispielsweise um ein Mauerwerk oder eine Betonwand. Im montierten Zustand sitzt der flanschartig erweiterte Kopf 6 des Dübels 1 am Rand der Bohrung 2 auf. Im unteren Abschnitt des Dübels 1, der im eingesetzten Zustand in der Bohrung 4 der Wand liegt, ist in bekannter Weise eine Spreizzone 7 ausgebildet, beispielsweise in Form von Schlitzen 8 im Bereich des dort innen und aussen konisch spitz zulaufenden Dübelendes. Im darüberliegenden Dübelabschnitt können gegebenenfalls noch zusätzliche weitere Spreizzonen 9 vorgesehen sein, beispielsweise in Form von bekannten Krallenelementen, die in entsprechenden Ausnehmungen in der Dübelwand eingesetzt sind.

Im oberen Abschnitt des Dübels 1, der im montierten Zustand innerhalb des Loches 2 des Bauteils 3 zu liegen kommt, ist eine zusätzliche Spreizzone 10 ausgebildet, beispielsweise wiederum in Form von mehreren über den Umfang verteilten Längsschlitzen, durch welche dazwischen liegende nach aussen radial aufweitbare Stege 19 in der Dübelwand entstehen, die aussen vorzugsweise mit entsprechenden Widerhaken versehen sind. Diese obere Spreizzone 10 kann jedoch auch in jeder anderen bekannten Weise ausgebildet sein, es können beispielsweise Spreizungen vorgesehen sein, die durch U-förmige Schlitze in der Dübelwand gebildet sind, oder es können auch hier die im Zusammenhang mit der Spreizzone 9 beschriebenen Krallenelemente verwendet werden. Der Innendurchmesser des Dübels 1 im Bereich der oberen Spreizzone 10 ist etwas grösser gewählt als der Innendurchmesser der unteren Spreizzonen 7, 9.

Fig. 2 zeigt das zugehörige Befestigungselement 11, das in diesem Beispiel als Schraubnagel mit Versenkkopf 12 und Kreuzschlitz 23 ausgebildet ist. Beim Eintreiben des Schraubnagels 11 in den Dübel 1 werden die beiden unteren Spreizzonen 7, 9 durch den Drallgewindeabschnitt 13 aufgespreizt und so der Dübel 1 fest im Mauerwerk 5 verankert. Im oberen Teil unmittelbar unterhalb des Schraubnagelkopfes 12 ist ein Schaftabschnitt 14 von etwas grösserem Aussendurchmesser als der Aussendurchmesser des Drallgewindes 13 ausgebildet. Der Schraubnagel 11 kann mit seinem im Durchmesser etwas geringeren Gewindeabschnitt 13 ungehindert durch die im Innendurchmesser etwas grössere obere Spreizzone 10 eingeschlagen werden, ohne dass hierdurch diese Spreizzone 10 aufgespreizt wird, erst wenn durch den Gewindeabschnitt 13 die etwas engeren Spreizzonen 7, 9 aufgespreizt werden und dann auch der im Aussendurchmesser etwas dickere Schaftabschnitt 14 in den Bereich der oberen Spreizzone 10 kommt, wird auch diese radial aufgespreizt und damit der Dübel 1 auch im Loch 2 des Bauteiles 3 fest verankert. Der verdickte obere Schaftabschnitt 14 kann zylindrisch glatt sein, er kann bei Bedarf jedoch auch geriffelt oder mit einem beliebig ausgebildeten zusätzlichen Gewinde versehen sein.

Die Lage der zusätzlichen Spreizzone 10 und die Länge des zusätzlichen Schaftabschnittes 14 richten sich nach der Art des zu befestigenden Bauteiles 3. Die Spreizzone 10 beginnt vorzugsweise in einem kurzen Abstand unterhalb des Dübelkopfes 6 und ist etwa so lang ausgebildet wie das Bauteil 3 dick ist. Die Länge des Abschnitts 14 muss mindestens so lang sein, dass die Spreizzone 10 bei eingesetztem Befestigungselement 11 sicher und voll aufgespreizt wird, er ist also mindestens so lang wie diese zusätzliche Spreizzone.

Auf der Innenseite des Dübels 1 sind, wie die Querschnittsbilder nach Fig. 1 zeigen, zumindest im Bereich der Spreizzonen 7, 9 und 10 mehrere parallele Stege ausgebildet. Der Übersichtlichkeit halber sind diese Stege in der Längsschnittdarstellung nicht gezeichnet. Das einfachste ist, diese Stege 15 im Dübel durchgehend auszubilden und sie etwas unterhalb des Dübelkopfes 6 enden zu lassen. Diese im Querschnitt etwa dreieckförmig oder trapezförmig ausgebildeten Stege 15 gewährleisten, dass in den Spreizzonen ein besserer Flächenkontakt zwischen dem Aussenumfang des Befestigungselementes und der Innenfläche des Dübels besteht, die erzeugten Radialkräfte also besser ausgenutzt sind und auch eine bessere Führung für das Befestigungselement beim Eintreiben besteht. Der Innendurchmesser des Dübels 1 im oberen Kopfbereich 16 ist vorzugsweise etwa gleich dem Aussendurchmesser des Schaftabschnittes 14 des Befestigungselementes gewählt, so dass das Befestigungselement im Dübel zentriert geführt ist.

Die obere zusätzliche Spreizzone 10 soll beim Einsetzen des Befestigungselementes 11 anfangs noch nicht aufgeweitet werden sondern erst durch den Abschnitt 14. Der Dübel 1 soll ausserdem einfach ungehindert durch das Loch 2 in die Bohrung 4 einsetzbar sein. Um dies sicherzustellen sind zumindest die Schlitze der oberen Spreizzone 10 durch Sollbruchstellen 18 gebildet, also durch dünne durchgehende Materialstege zunächst überbrückt, wie dies die Schnittbilder nach Fig. 1 schematisch andeuten. Es bestehen also anfänglich noch keine Schlitze sondern nur Längsnuten in der Dübelaussenwand, die erst beim Eintreiben des Abschnittes 14 in die Spreizzone 10 zu Schlitzen aufreissen und dann die dazwischenliegenden Stegbereiche 19 zum radialen Aufspreizen nach aussen frei geben. Diese Art des anfänglichen Zusammenhaltens der Spreizelemente durch Sollbruchstellen 18 kann natürlich auch bei den unteren Spreizzonen 7 und 9 angewendet werden. Dadurch wird das Einsetzen des Dübels auch in das Loch 4 erleichtert und die Längsschlitze 8 bzw. die entsprechenden Schlitze der Spreizzone 9 werden erst aufgerissen, wenn das Befestigungselement 11 eingetrieben wird. Zwischen Kopf 12 des Befestigungselementes 11 und der Oberfläche 20 des Bauteiles 3 ist eine Beilagscheibe 21 eingesetzt, deren Durchmesser grösser als der Durchmesser des Dübelkopfes 6 gewählt ist. Auf der Unterseite der Scheibe 21 sind vorzugsweise nach unten abstehende Krallen 22 ausgebildet, die sich beim Eintreiben des Befestigungselementes in die Oberfläche 20 des Bauteiles 3 einkrallen. Das Mittelloch der Scheibe 21 ist der Form des Kopfes 12 angepasst. Diese zusätzliche Scheibe 21 gewährleistet, dass der Dübelkopf 6 nicht ausreisst und auch das die Bohrung 2 umgebende Material des Bauteiles 3 durch die Wirkung der Spreizzone 10 nicht nach oben ausgedrückt wird. Die Scheibe 21 kann gegebenenfalls unmittelbar an dem Befestigungselement 11 angepresst sein oder auf andere Weise unverlierbar am Hals dieses Befestigungselements angebracht sein.

Zum Schutz der Ränder 24 der beispielsweise als Kreuzschlitz 23 ausgebildeten Schraubwerkzeug-Vertiefung des Schraubnagels 11 gegen Hammerhiebe sind diese Ränder 24 gegenüber der oberseite 26 des Kopfes 12 nach innen etwas zurückgesetzt. In der Kopfoberseite ist zu diesem Zweck eine im Querschnitt grösser als die Schraubwerkzeug-Vertiefung 23 ausgebildete zusätzliche flache Vertiefung 25 vorgesehen. Die Ränder 24 der Schraubwerkzeug-Vertiefung 23 können auch nur einfach abgerundet, abgeschrägt und/oder mit einer Stufenkante versehen sein, auch dadurch können die Ränder gegen Hammerschläge geschützt werden. Damit ist sichergestellt, dass in die Vertiefung 23 nach dem Einschlagen des Schraubnagels mit Sicherheit ein entsprechender Schraubendreher ungehindert eingesetzt werden kann, der Schraubnagel also justiert oder sogar wieder herausgedreht werden kann. Das gleiche könnte damit erreicht werden, dass auf der Oberseite des Nagelkopfes zusätzliche Erhöhungen vorgesehen sind, beispielsweise in Form von verteilten Noppen oder eines um den Rand des Nagelkopfes verlaufenden zusätzlichen Randwulstes.

**Patentansprüche**

1. Befestigungssatz zum Befestigen von Wandverkleidungen, Leisten oder dgl. Bauteilen an einer Wand mit einem Klemmkopfdübel aus Kunststoff, der zwei Spreizzonen aufweist, von denen die untere in ein Loch der Wand einseztbar ist und die obere in dem Loch des zu befestigenden Bauteiles aufspreizbar ist, und mit einem in diesen Dübel eintreibbaren und die Spreizzonen aufspreizenden Befestigungselement, dadurch gekennzeichnet, dass der Innendurchmesser der oberen Dübelspreizzone (10) etwas grösser als der Innendurchmesser der unteren Dübelspreizzone (7, 9) gewählt ist, und dass am Befestigungselement (11) ein im eingetriebenen Zustand der oberen Dübelspreizzone (10) zugeordneter Abschnitt (14) von grösserem Aussendurchmesser als der der unteren Dübelspreizzone (7, 9) zugeordnete Abschnitt (13) ausgebildet ist, wobei der Abschnitt (14) eine etwa der Dicke des zu befestigenden Bauteiles (3) entsprechende Länge besitzt.

2. Befestigungssatz nach Anspruch 1, dadurch gekennzeichnet, dass die obere Dübelspreizzone (10) eine etwa der Dicke des zu befestigenden Bauteiles (3) entsprechende Länge besitzt.

3. Befestigungssatz nach einem der beiden Ansprüche 1 oder 2, dadurch gekennzeichnet, das die Dübelspreizzone (7, 9; 10) in an sich bekannter Weise durch in der Dübelwand ausgebildete Längs- und/oder Querschlitze (8) gebildet sind.

4. Befestigungssatz nach Anspruch 3, dadurch gekennzeichnet, dass mindestens einige der Längs- und/oder Querschlitze (8) der Dübelspreizzonen (7, 9; 10) auf ihrer ganzen Länge als erst bei eingetriebenem Befestigungselement (11) aufreisende dünnwandige Sollbruchstellen (18) ausgebildet sind.

5. Befestigungssatz nach einem oder mehreren der vorhergehenden Ansprüche, dadurch gekennzeichnet, dass mindestens im Bereich der Dübelspreizzonen (7, 9; 10) auf der zylindrischen Dübelinnenfläche mehrere vorzugsweise gleichmässig über den Umfang verteilte und in Längsrichtung parallele Stege (15) ausgebildet sind.

6. Befestigungssatz nach einem oder mehreren der vorhergehenden Ansprüche, dadurch gekennzeichnet, dass der im Durchmesser grössere obere Abschnitt (14) des Befestigungselements (11) auf seiner Aussenseite zylindrisch glatt ist oder mit einem Gewinde versehen ist.

7. Befestigungssatz nach einem oder mehreren der vorhergehenden Ansprüche, dadurch gekennzeichnet, dass unterhalb des Kopfes (12) des Befestigungselementes (11) eine Beilagscheibe (21) angeordnet ist, die einen gegenüber dem Durchmesser des Dübelkopfes (6) grösseren Aussendurchmesser besitzt und vorzugsweise nach unten abstehende Krallen (22) aufweist.

## Revendications

1. Dispositif de fixation pour fixer des revêtements, listeaux ou analogues sur un mur au moyen d'une cheville à tête de serrage en matière plastique, qui présente deux zones d'étrésillons (10 et 7, 9) dont celle qui est la plus basse peut être placée dans un trou (4) de la paroi (5) et dont celle qui est la plus haute est extensible dans le trou (2) de l'élément constructif (3) à fixer, et avec un élément de fixation (11) qui peut être enfoncé dans la cheville précitée et qui peut être étendu dans la zone des étrésillons, caractérisé en ce que le diamètre intérieur de la zone supérieure d'étincelles à cheville (10) est un peu plus grand que le diamètre intérieur des zones inférieures d'étincelles à cheville (7, 9) et en ce que sur l'élément de fixation (11) est réalisé à l'état enfoncé un tronçon (14) de la zone supérieure (10) ayant un diamètre extérieur supérieur à celui de la section (13) subordonnée aux zones inférieures (7, 9), la section (14) ayant une longueur qui correspond à peu près à l'épaisseur de l'élément de construction (3) à fixer.

2. Dispositif de fixation suivant la revendication 1, caractérisé en ce que la zone supérieure d'étincelles à chevilles (10) a une longueur correspondant à environ l'épaisseur de l'élément de construction (3) à fixer.

3. Dispositif de fixation suivant l'une des revendications 1 ou 2, caractérisé en ce que les zones d'épaisseur (7, 9; 10) sont, de façon connue en soi, formées dans la paroi par des fentes longitudinales et/ou transversales (8).

4. Dispositif de fixation suivant la revendication 3, caractérisé en ce qu'au moins certaines des fentes longitudinales et/ou transversales (8) des zones d'épaisseur (7, 9; 10) sont formées sur toute leur longueur par un élément de fixation (11) ouvrant brusquement des points de rupture obligatoires (18) à parois minces.

5. Dispositif de fixation suivant une ou plusieurs des revendications précédentes, caractérisé en ce qu'au moins au voisinage des zones d'épaisseur (7, 9; 10) sont formées, sur les surfaces intérieures cylindriques des goujons, plusieurs passerelles (15), de préférence régulièrement espacées, réparties sur le pourtour et parallèles dans le sens de la longueur.

6. Dispositif de fixation suivant une ou plusieurs des revendications précédentes, caractérisé en ce que la section supérieure (14) la plus élevée de l'élément de fixation (11) est lisse et cylindrique sur sa face extérieure ou munie d'un filetage.

7. Dispositif de fixation suivant une ou plusieurs des revendications précédentes, caractérisé en ce qu'au-dessous de la tête (12) de l'élément de fixation (11) est disposée une rondelle (21) qui possède un diamètre extérieur supérieur à celui de la tête de cheville (6) et présente de préférence des griffes (22) écartées vers le bas.

## Claims

1. A fastening set for fixing panels, strips or like construction parts to a wall, comprising a synthetic clamping-head dowel which includes two spreading zones, the lower one being insertable in a hole in the wall and the upper one being spreadable in the hole of the structural element to be fixed, and further comprising a fastener element adapted to be driven into this dowel and spreading the spreading zones, characterized in that the inner diameter of the upper dowel spreading zone (10) is so selected as to be somewhat larger than the inner diameter of the lower dowel spreading zone (7, 9), and in that the fastener element (11) is formed with a portion (14) which is associated with the upper dowel spreading zone (10), when driven in, and has a greater outer diameter than the portion (13) associated with the lower dowel spreading zone (7, 9), the length of portion (14) corresponding approximately to the thickness of the structural element (3) to be fixed.

2. A fastening set as claimed in claim 1, characterized in that the upper dowel spreading zone (10) has a length which corresponds approximately to the thickness of the structural element (3) to be fixed.

3. A fastening set as claimed in claim 1 or 2, characterized in that the dowel spreading zones (7, 9; 10) are embodied in *per se* known manner by longitudinal and/or transverse slits (8) formed in the wall of the dowel.

4. A fastening set as claimed in claim 3, characterized in that at least some of the longitudinal and/or transverse slits (8) of the dowel spreading zones (7, 9; 10) are designed throughout their lengths as thin-walled rated rupture sites (18) which are not torn open until the fastener element (11) is driven in.

5. A fastening set as claimed in one or more of the preceding claims, characterized in that the cylindrical internal surface of the dowel is formed, at least in the area of the dowel spreading zones (7, 9; 10) with a plurality of webs (15), preferably distributed evenly around the circumference and extending in parallel in longitudinal direction.

6. A fastening set as claimed in one or more of the preceding claims, characterized in that the upper portion (14) of the fastener element (11) having the greater diameter either has a smooth cylindrical outer face or is formed with a thread.

7. A fastening set as claimed in one or more of the preceding claims, characterized in that a washer (21) is arranged below the head (12) of the fastener element (11), has a greater outer diameter as compared to the diameter of the dowel head (6), and preferably comprises claws (22) projecting in downward direction.

0 034 346

FIG. 1

FIG. 2

I-I

II-II